# EUROPEAN PATENT APPLICATION

(11) **EP 2 961 208 A1**
(43) Date of publication of application: **30.12.2015**
(21) Application number: 14306041.6
(22) Date of filing: 27.06.2014
(51) Int. Cl.: H04W 12/04, H04L 29/06, H04W 12/06

(54) **Method for accessing a service and corresponding application server, device and system**

(71) Applicant: Gemalto SA, 92190 Meudon (FR)
(72) Inventor: Paillart, Frédéric, 13705 LA CIOTAT (FR); Dandelot, Thomas, 13705 LA CIOTAT (FR); Chretien, Stéphane, 13705 LA CIOTAT (FR)

(57) **Abstract**

The invention relates to a method for accessing a service.

According to the invention, a device 12 authenticates to a mobile network server. The device sends to an application server 18 an enrolment request 22. The application server sends to the device at least one key 26 relating to the application server. The device sends to the application server a request 28 for getting at least one token accompanied with at least one key relating to a device application. The device application key is ciphered by using the application server key. The application server receives an identifier 210 relating to a device user. The application server verifies whether the identified device user is or is not authorized to access the service. Only if the identified device user is authorized, the application server deciphers the ciphered device application key and ciphers at least one token by using the device application key. The application server sends to the device at least one ciphered token 212. The device deciphers the at least one ciphered token. The device stores the at least one token that allows the device application to be authenticated.

The invention also relates to corresponding device, application server and system.

## Description

### Field of the invention:

The invention relates generally to a method for accessing a service.

Furthermore, the invention pertains to an application server for accessing a service.

Moreover, the invention also relates to a device for accessing a service.

The present invention is notably applicable to a mobile radio-communication field in which the device is a mobile terminal, like a mobile (tele)phone.

Finally, the invention concerns a system for accessing a service that includes a device and an application server which are connected to each other.

### State of the art:

As known per se, a mobile phone is being more and more used for accessing a service, like e.g. a mobile payment service. To access a service, the mobile phone requests a service provider to download a corresponding application.

However, once the application is downloaded and installed on the mobile phone, there is a need to securely enrol the application to an application server before a phone user uses the application.

### Summary of the invention:

The invention proposes a solution for satisfying the just herein above specified need by providing a method for accessing a service.

According to the invention, the method comprises the following steps. A device authenticates to a mobile network server. The device sends to an application server an enrolment request. The application server sends to the device at least one key relating to the application server. The device sends to the application server a request for getting at least one token accompanied with at least one key relating to a device application. The device application key is ciphered by using the application server key. The application server receives an identifier relating to a device user. The application server verifies whether the identified device user is or is not authorized to access the service. Only if the identified device user is authorized, the application server deciphers the ciphered device application key and ciphers at least one token by using the device application key. The application server sends to the device at least one ciphered token. The device deciphers the at least one ciphered token. The device stores the at least one token, the at least one token allowing the device application to be authenticated.

The principle of the invention consists in using a device authentication to a mobile network server before the device transmits a request for enrolling a device application to an application server. The application server sends back a server key which the device uses to cipher a device application key that is thus transmitted back along with a token request. The application server identifies a device user. When the identified device user is authorized, the application server then uses the device application key to cipher a token(s) for its(their) sending to the device.

The application server provides the device application with a key relating to the application server, as server key, so as to send, in a ciphered manner, data from the device application to the application server. Then, the device application by using the server key provides securely the application server with a key relating to the device application, as device application key, so as to send, in a ciphered manner, data from the application server to the device application.

It is to be noted that the device application key is used as a transport key, i.e. to transport sensitive data, namely a token(s), during such an (application) enrolment method.

A device authentication to a mobile network server, as an application enrolment process pre-requisite, has occurred. Then, the application server gets an identifier relating to a device user that is trustable since the mobile network server has authenticated the device. The identifier relating to a device user is used by the application server as a proof or evidence of a previous successful mobile network server authentication.

Otherwise, i.e. if the device is not authenticated by the mobile network server, then the application server does not get any identifier relating to a device user and does not provide the device application with any token.

Thus, the invention solution allows providing securely the device application with one or several tokens that are ciphered by using the device application key.

The token(s), as authentication data, is(are) data allowing the device application to be authenticated, so as to access a corresponding service.

The device user does not have to provide manually user credentials, as authentication data, like a device user, a Personal Identity Number (or PIN), a login and a password, so as to enrol the device application to the application server.

The invention solution is therefore user friendly.

Moreover, the Mobile Network Operator (or MNO) or another third party does not need to pre-provision any user credentials, as token(s) and application authentication data, into the device application.

The invention solution is also therefore convenient for the MNO or another party.

Thus, the invention solution allows provisioning automatically one or several tokens without involving the device user (apart from her or his possible authentication at the device side, so as to allow unlocking an authentication key that is used for the device authentication before a mobile network entity).

Once provided with the token(s) by the application server, the device application is able to authenticate to one or several remote servers by using the token(s), through either a mobile network channel, such as an MNO's 3GPP network, or a non-mobile network channel, like a Wi-Fi network, so as to access a corresponding service.

According to a further aspect, the invention is an application server for accessing a service.

According to the invention, the server is configured to receive an enrolment request, to send to the device at least one key relating to the application server, and to receive a request for getting at least one token accompanied with at least one key relating to a device application. The device application key is ciphered by using the server key. The server is further configured to receive an identifier relating to a device user, to verify whether the identified device user is or is not authorized to access the service, to decipher, only if the identified device user is authorized, the ciphered device application key, to cipher at least one token by using the device application key and to send to the device at least one ciphered token.

According to still a further aspect, the invention is a device for accessing a service.

According to the invention, the device is configured to authenticate to a mobile network server, to send to an application server an enrolment request, to receive at least one key relating to the application server, to send to the application server a request for getting at least one token accompanied with at least one key relating to a device application. The device application key is ciphered by using the application server key. The device is further configured to receive at least one ciphered token, to decipher the at least one ciphered token and to store the at least one token. The at least one token allows the device application to be authenticated.

It is to be noted that the device may be any kind of communicating device, like a chip soldered to a host device, a Secure Element (or SE), a terminal or a user terminal.

According to still a further aspect, the invention is a system for accessing a service.

According to the invention, the system comprises a device and an application server. The device is connected to the application server. The device is configured to authenticate to a mobile network server and to send to the application server an enrolment request. The application server is configured to send to the device at least one key relating to the application server, to receive an identifier relating to a device user and to verify whether the identified device user is or is not authorized to access the service. The application server is further configured to decipher, only if the identified device user is authorized, the ciphered device application key and to cipher at least one token by using the device application key and to send to the device at least one ciphered token. The device is configured to decipher the at least one ciphered token and to store the at least one token. The at least one token allows the device application to be authenticated.

### Brief description of the drawings:

Additional features and advantages of the invention will be apparent from a detailed description of one preferred embodiment of the invention, given as an indicative and non-limitative example, in conjunction with the following drawings:

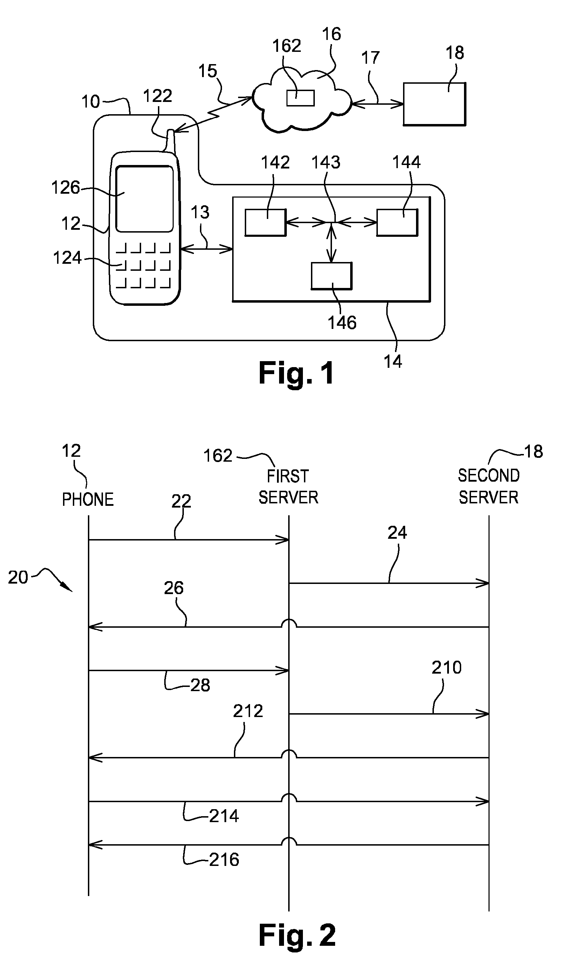

- Figure 1 illustrates a simplified diagram including a first (remote) server that is connected to a second (remote) server and a mobile phone, as a (client) device, the second server being arranged to receive a message with a device user identifier, to check whether the identified device user is authorized and to send to the authorized device a token(s) by using a device application key, according to the invention; and
- Figure 2 represents an example of a message flow between the device, the first and the second server of figure 1, so that, further to a device initiation of a communication with the second server, the device downloads securely a token(s) allowing to be authenticated through a mobile or a non-mobile communication network.

### Detailed description:

Herein under is considered a case in which the invention method for accessing a service is implemented by a mobile equipment, as a device for accessing a service, being coupled to or including a chip, a mobile network entity, as a first remote server, and an application server, as a second remote server.

According to another embodiment, the invention method for accessing a service is implemented by a mobile phone, as a standalone device for accessing a service, and two remote servers. In other words, the mobile phone does not cooperate with any chip, so as to authenticate to a mobile communication network and to get a token(s) allowing to authenticate a mobile phone application. According to such an embodiment (not represented), the device for accessing a service is adapted to carry out the functions that are carried out by the chip and the device and that are described infra.

Naturally, the herein below described embodiment is only for exemplifying purposes and is not considered to reduce the scope of the invention.

Figure 1 shows schematically a mobile equipment 10, one or several mobile radio-communication networks 16, a first remote server 162 and a second remote server 18.

The mobile equipment 10 includes a mobile phone 12, as a user terminal, and an embedded Universal Integrated Circuit Card (or eUICC) 14, as an incorporated chip.

Instead of being embedded, the chip may be included within a smart card or another medium, as a Secure Element (or SE), that is coupled to the user terminal, as host device. The chip may be either fixed to or removable from the host device.

The chip may be included within an SE.

The invention does not impose any constraint as to a kind of the SE type. As removable SE, it may be a Subscriber Identity Module (or SIM) type card, a Secure Removable Module (or SRM), a smart dongle of the USB (acronym for "Universal Serial Bus") type, a (micro-) Secure Digital (or SD) type card or a Multi-Media type Card (or MMC) or any format card to be coupled to a host device, as device for accessing a service.

For the sake of simplicity, the mobile phone 12, the eUICC 14, the mobile radio-communication network(s) 16, the first remote server 162 and the second remote server 18 are termed herein after the phone 12, the chip 14, the network 16, the first server 162 and the second server 18 respectively.

Only one phone 12 that is connected, through the network 16, to the second server 18 is represented for a clarity reason. However, the second server 18 is able to be accessed from and to access, Over-The-Air (or OTA), Over-The-Internet (or OTI), or Over The Cloud (or OTC), a fleet of connected devices.

Instead of a phone 12, it may be any other device including means for processing data, comprising or being connected to Long Range (or LR) Radio-Frequency (or RF) communication means for exchanging data with outside, and comprising or being connected to means for storing data.

The LR RF may be fixed at several hundreds of MHz, e.g. around 850, 900, 1800, 1900 and/or 2100 MHz.

The phone 12 is used for accessing the network 16.

As to the phone 12, it may be any device including means for processing data, comprising or being connected to an LR RF antenna 122 for sending to and/or receiving data from outside, comprising or being connected to means for interfacing with a user, as Man Machine Interface (or MMI), like a keyboard 124, a loudspeaker (not represented) and/or a display screen 126, and comprising or being connected to means for storing data.

The phone 12 may be connected to or include Contact-Less (or CL) communication means for exchanging data, like e.g. a Wi-Fi link (not represented), with outside, such as a server (not represented).

Within the present description, the adjective "contact-less" denotes notably that the communication means communicates via one or several Short Range (or SR) RF links.

The SR RF link may be related to any CL technology that allows the phone 12 to exchange data through a CL link with outside. The SR RF may be related to, e.g. a Near Field Communication (or NFC), a Wi-Fi and/or a Bluetooth type communication technology(ies) or the like, as a non-mobile (radio-)communication channel.

Instead of the phone 12, the device for accessing a service may be, for instance, a Machine-to-Machine (or M2M) controller, a set-up box, a desktop computer, a laptop computer, a media-player, a game console, a tablet, a netbook, a handset and/or a Personal Digital Assistance (or PDA) that incorporates or cooperates with a baseband radio processor.

The LR RF antenna 122 allows communicating data, through an LR RF link 15, with one or several networks 16.

The phone 12 is able to exchange data, in a distant manner, with any entity included or connected to the network 16, like the second server 18.

A phone microprocessor, as data processing means, processes data originating from either an internal component or an external entity.

A phone memory(ies), as data storing means, may comprise one or several volatile memories and one and/or several non-volatile memories.

The phone memory stores data, like user data.

The phone memory (or an SE memory) stores an identifier relating to the second server 18.

The phone memory stores an Operating System (or OS) and one or several applications to be executed by the phone microprocessor.

As supported application(s), there is one or several applications for communicating with an external device, like the second server 18, including an application that allows enrolling an application or a set of applications. The application to be enrolled may be a mobile payment application, a mobile wallet application, as application set, that includes several applications that need an enrolment prior to its(their) use by the phone user.

The invention application supported by the phone 12 or termed (phone) enrolment application allows getting, in a seamless manner, a token(s), as credentials to be used for accessing one or several services.

To get the token(s), the enrolment application allows sending to the second server 18 an enrolment request.

The enrolment application allows receiving one or several keys relating to the second server 18, as second server key.

The enrolment application may verify a signature or a certificate relating to the second server 18, so as to authenticate, when the signature or the certificate is successfully verified respectively, a sender of the concerned second server 18 key(s).

The enrolment application allows sending to the second server 18 a request for getting one or several tokens along with one or several keys relating to the enrolment application. The enrolment application key is ciphered by using a received second server key.

The enrolment application allows receiving one or several ciphered tokens and deciphering the ciphered token(s). Such a token(s) originates from the second server 18 by using a second server 18 key.

The enrolment application allows storing within a phone memory or a chip memory the received token(s). The received token(s) allow(s) the enrolment application to be authenticated to access the service.

The received token(s) may be stored after its(their) encryption by using a key, like a key relating to a controller (e.g. a server) of the token(s).

The phone memory stores preferentially an application for generating a key, as phone application key, relating to the enrolment application.

The phone memory stores a key relating to the enrolment application (to be enrolled). The phone application key may be asymmetric or symmetric.

According to a particular embodiment, the phone memory stores an application for ciphering data, like the phone application key, to be sent from the phone 12 to a recipient of the concerned data by using a key either relating to the recipient or that is shared with the recipient. The ciphering application may use a predetermined algorithm, like a Rivest Shamir Adleman (or RSA) type algorithm, and a key relating to the second server 18, as addressee of the phone application key.

The phone memory stores an application for deciphering data, like a token(s), to be received from the second server 18 by using preferably a key relating to the phone application. The deciphering application may use a predetermined algorithm, such as an Advanced Encryption Standard (or AES), a Data Encryption Standard (or DES) type algorithm or the like, and a key relating to the second server 18, as addressee of the phone application key.

The phone MMI allows a phone user to interact with the phone 12, the chip 14 or a device external to the mobile equipment, like a remote server. Such a phone user interaction may be used notably for providing, over a non-mobile communication network, a remote server with a downloaded token(s), so as to access a service.

The phone 12 plays preferably a role of a modulator-demodulator (or modem) notably for the chip 14.

The phone 12 is preferably coupled or connected to the chip 14.

The phone I/O interfaces include one or several I/O interfaces for exchanging data with the chip 14.

The chip 14 is under control of the phone microprocessor.

Alternately, instead of being coupled to the chip 14, the phone memory(ies) stores data stored within the chip 14 as described infra.

According to a particular embodiment, the chip 14 is soldered to a Printed Circuit Board (or PCB) of the phone 12.

Alternatively, the phone I/O interface with the chip 14 is an International Organization for Standardization (or ISO) 7816 type interface, as contact interface, when the chip 14 is inserted, in a removable manner, within the phone 12.

Alternately, instead of a contact interface, the phone I/O interface with the chip 14 is connected to or includes a CL interface.

The chip 14 belongs to a user, as subscriber to a wireless service(s).

The chip 14 is connected, through a bi-directional link 13, to the phone 12, as a chip host device.

The chip 14 includes a microprocessor(s) 142, as data processing means, a memory(ies) 144, as data storing means, and one or several I/O interfaces 146 that are internally all connected, through an internal bidirectional data bus 143, to each other.

The I/O interface(s) 146 allow(s) communicating data from the internal chip components to the chip exterior and conversely.

The (chip) memory 144 stores an OS.

The memory 144 stores data relating to one or several subscriptions.

The data relating to one subscription include:
- an International Mobile Subscriber Identity (or IMSI), as subscriber and service subscription identifier for accessing a (mobile radio-communication) network 16;
- a key Ki, as network authentication key, allowing to authenticate the concerned subscriber to the network 16; and
- Milenage or any other authentication algorithm allowing to authenticate the concerned subscriber to the network 16.

The IMSI is used for identifying a subscriber to an MNO or the like.

The IMSI is associated, at the network 16 side, with an identifier(s) relating to a device user, like a Mobile Subscriber Integrated Services Digital network Number (or MSISDN) and/or an URI.

The microprocessor 142 processes, controls and communicates internally data with all the other components incorporated within the chip and, through the I/O interface(s) 146, with the chip exterior.

The microprocessor 142 executes or runs one or several applications.

As application(s) supported by the chip 14, there is one or several Subscriber Identity Module (or SIM) type applications for authenticating a subscriber/chip/host device to a (mobile) network(s) 16.

The SIM type application(s) includes, among others, a SIM application for a type Global Service for Mobiles (or GSM) network, a Universal Subscriber Identity Module (or USIM) application for a Universal Mobile Telecommunications System (or UMTS) type network, a Code Division Multiple Access (or CDMA) Subscriber Identity Module (or CSIM) application and/or an Internet protocol Multimedia Subsystem (or IMS) Subscriber Identity Module (or ISIM) application.

The SIM type application(s) is(are) stored within the chip memory 144.

The SIM type application(s) allow(s) the phone 12 to identify and to authenticate to one or several networks 16 and more exactly a (mobile) network authentication server, like, e.g. a Home Location Register (or HLR) relating to a GSM and/or UMTS type network(s) or a Home Subscriber Server (or HSS) relating to a LTE type network.

The microprocessor 142 executes, in a preferred manner, one or several security functions.

The security functions include preferably a user authentication process to be used prior to continuing an execution of an application, like the enrolment application, that has to be executed by the phone 12 or the chip 14. To authenticate the user, the user has to provide a Personal Identity Number (or PIN) or biometric data, as user reference data. The user reference data is securely stored within the (chip) memory 144.

The microprocessor 142 is preferably able to initiate actions, in order to interact directly with the outside world, in an independent manner of the phone 12, as a chip host device. Such a capacity of interaction at the initiative of the chip 14 is also known as a proactive capacity. According to one preferred embodiment, the chip 14 is able to use a SIM ToolKit (or STK) type command, as a proactive command to be sent to the chip host device.

The chip 14 is thus able to send, at its (own) initiative, through its host, to any device connected to the host data by using a proactive command for sending a message to the concerned device to be addressed. The device to be addressed, like an entity for authenticating the subscriber/chip/host, may be included within or connected to the network 16.

The network 16 may be constituted by a GSM, a General Packet Radio Service (or GPRS), a UMTS, a UTRAN (acronym for "UMTS Terrestrial Radio Access Network"), an EDGE (acronym for "Enhanced Data Rates for GSM Evolution"), a Code Division Multiple Access (or CDMA), a WLAN (acronym for "Wide Local Area Network") and/or a Long Term Evolution (or LTE) type network(s).

Such a network set is not exhaustive but only for exemplifying purposes.

The network 16 is connected to (and/or comprises) at least one Internet type network.

The network 16 includes a Short Message Service Center (or SMS-C) or the like, as a mobile network entity.

As known per se, the SMS-C is able to receive, store and forward a Short Message Service (or SMS) type message to its or their specified addressee devices.

The network 16 includes a network entity, such as a Home Location Register (or HLR) (not represented), a Home Subscriber Server (or HSS) 164 or the like, as a mobile network server (not represented).

As known per se, the HLR adds, as routing information, within an SMS type message, an MSISDN, as an identifier that is associated with the phone 12 and that allows reaching the phone 12, as an addressee of an SMS type message. The MSISDN, as a phone user identifier, is used for routing a call to the concerned subscriber.

The network 16 includes, e.g. a Gateway GPRS Support Node (or GGSN) equipment, as a mobile network server and first server 162.

The first server 162 is only known to the network 16 operator and the second server 18.

The first server 162 is identified by a Uniform Resource Identifier (or URI), like an Uniform Resource Locator (or URL), an Internet Protocol (or IP) address or the like, as an identifier relating to the first server 162.

The first server 162 may be operated by a mobile radio-communication network operator, as a Mobile Network Operator (or MNO) or a Mobile Virtual Network Operator (or MVNO), a service provider or on its behalf.

The first server 162 is hosted by a computer.

The first server 162 includes a processor(s) (not represented), as data processing means, comprises and/or is connected to a memory(ies) (not represented), as data storing means, and one or several I/O interfaces (not represented).

The first server memory stores a predetermined identifier relating to the second server 18.

The first server 162 is dedicated to running an application for managing a first database and communicating data of the first database to outside, when applicable.

The first database includes a set in which each client device is identified and associated with one (or several) updated identifier(s) relating to the concerned client device. Each (identified) client device is accessible by using the updated (client) device identifier that is valid for addressing the client device.

The updated client device (user) identifier(s) may include:
- an MSISDN;
- an IMSI;
- a Temporary Mobile Subscriber Identity (or TMSI); and/or
- a URI.

Once the first server 162 has retrieved the corresponding (updated) client device user identifier, the first server 162 writes it within the first database in association with the client device included within the client device set.

The first server 162 thus tracks each managed client device.

The first server 162 plays a role of a gateway between the (mobile) network 16 and one or several external Internet Protocol (or IP) type networks (not represented).

The first server 162 is able to receive a message received from a managed client device, as a sender that is identified within the received message, while keeping the message content and inserting an (updated) identifier relating to the client device user, and to send a thus generated message to the second server 18.

The first server 162 is able to detect a predetermined URI, URL, IP address or the like, as an identifier relating to the second server 18, that is comprised within a message to be received.

The first server 162 is thus able to intercept a message originating from a registered client device connected to the network 16 and including an identifier relating to the second server 18.

The sender of the intercepted message is the client device entity that addresses the intercepted message to the second server 18.

The intercepted message comprises the second server 18 identifier, as an addressee or recipient of the received message.

The first server 162 generates a message that includes the content of the intercepted message by inserting notably an identifier relating to a client device user that is associated with an identifier of the sender of the intercepted message.

The first server 162 may further insert within the generated message an identifier relating to a predetermined connection point relating to the second server 18, so as to connect, via a dedicated and secured channel, to the second server 18.

The second server 18, like a Cloud Enrolment Service (or C.E.S.) server, as application server, is connected, through a bi-directional link 17, to the network 16.

The second server 18 is identified by a URI, like an URL, an IP address or the like, as an identifier relating to the second server 18. The second server identifier may be stored within a phone memory or the chip memory 144.

The second server 18 may be operated by a service provider or on its behalf.

The second server 18 is hosted by a computer.

The second server 18 includes a processor(s) (not represented), as data processing means, comprises and/or is connected to a memory(ies) (not represented), as data storing means, and one or several I/O interfaces (not represented).

The second server 18 memory stores a database. The database includes a predetermined set of one or several identifiers relating to device users, as a white list and/or a black list. Such a device user identifier set associates information relating to either an authorization for accessing the requested service or an interdiction for accessing the requested service with each device user identifier.

The second server 18 memory stores one or several keys relating to the second server 18, like a private key and a corresponding public key relating to the second server 18 or a symmetric key to be shared with a client device.

The second server 18 memory stores, for each identified device user, one or several tokens, as credentials to be used for accessing one or several services.

The second server 18 is dedicated to running an application for managing a second database and communicating a token(s) of the second database to outside.

The invention application supported by the second server 18 or termed server enrolment application allows providing securely a requesting device with a token(s).

The second server 18 is configured to receive, through possibly the first server 162, from a (client) device, like the phone 12, an enrolment request.

The second server 18 is arranged to send to the identified device application one or several keys relating to the second server 18.

The second server 18 sends preferably to the identified device application a certificate including one or several public keys relating to the second server 18 or a key to be shared with the sender of the enrolment request.

Alternately, the second server 18 signs the (second) server key(s) and sends to the sender of the enrolment request the (second) server key(s) along with the associated signature.

The second server 18 is further arranged to receive a request for getting one or several tokens along with one or several keys relating to the enrolment application supported by a requesting device, as device application key(s). The device application key(s) is(are) preferentially ciphered at the requesting device side by using the second server 18 key.

The second server 18 is configured to receive an identifier relating to a device user.

The second server 18 uses the device user identifier for proving that the device user is registered to a mobile network 16 and has previously been successfully authenticated since the device user identifier is to be provided by the first server 162, as a mobile network controller.

The second server 18 is adapted to verify whether the identified device user is or is not authorized to access the (requested) service.

If the identified device user is not authorized to access the service, then the second server 18 aborts the thus launched enrolment process and no token is issued to the requesting device. The second server 18 may further inform the requesting device user that she or he will not be provided with any token. The identified device user will therefore not be able to access a service that needs to be provided with a token(s).

Otherwise, i.e. only if the identified device user is authorized, the second server 18 is arranged to continue the launched enrolment process. The second server 18 is preferably able to decipher the device application key(s) by using either a private key relating to the second server 18 that corresponds to the public key relating to the second server 18 or a key shared with the requesting device. The second server 18 may generate one or several tokens. The second server 18 is preferentially able to cipher the token(s) to be sent by using a key relating to an application supported by the requesting device, as device application key.

The second server 18 is able to send to the requesting device the token(s) that is(are) preferably ciphered.

**Figure 2** depicts an exemplary embodiment of a message flow 20 that involves the phone 12, as a user terminal, the first server 162, as a mobile network entity, and the second server 18, as an application server.

In the described example, it is assumed that the phone 12 is connected to the mobile network 16. In other words, the phone user has subscribed to a mobile (communication) network service allowing to communicate to or through the mobile network 16 and the phone 12 is authenticated to a mobile network server.

It is further assumed that the phone 12 exchanges with the second server 18 by using e.g. HyperText Transfer Protocol (or HTTP) type messages or HTTP/SMS type messages. However, any other data communication protocol between the phone 12 and the server 18, like e.g. a Secure Sockets Layer (or SSL) protocol, may be used alternatively or additionally to the HTTP and/or SMS protocol(s).

While it is specified infra that the phone 12 exchanges with the second server 18, more exactly, it is a (phone) enrolment application that exchanges with a (second) server enrolment application.

The phone 12 sends to the second server 18 a first message 22 including an enrolment request, such as an "HTTP://g-host/enroll/initiate", as a request of the type "HTTP GET".

The enrolment request includes a predetermined URL relating to the second server 18, as a particular second server identifier.

According to a particular invention embodiment (represented), the predetermined second server identifier is to be detected or found by the first server 162.

The first server 162, as a mobile network entity, intercepts the first message 22 including the enrolment request by detecting the predetermined second server identifier, as a recipient device of the first message 22.

The first server 162 gets from a retrieved subscription identifier, like an IMSI, that is used by the mobile network 16 to identify the mobile equipment 10 (i.e. the phone 12/chip 14 system), a corresponding MSISDN, as an identifier relating to a phone user.

Once the first server 162 has retrieved the phone user identifier, the first server 162 generates based on the first message 22 a second message 24 including the enrolment request, by inserting the phone user identifier within a header of the second message 24. The second message 24 includes, besides the first message 22 content, the corresponding MSISDN, as the phone user identifier.

The first server 162 may further insert within a thus generated second message an identifier relating to a predetermined connection point relating to the second server 18. The predetermined second server connection point identifier allows addressing a connection point that is dedicated to accessing the second server 18 for an application enrollment process.

According to an alternative (not represented), instead of passing the enrolment request through the first server 162, the phone 12 sends directly to the second server 18 a unique message including an enrolment request, such as an "HTTP://ghost/enroll/initiate", as a request of the type "HTTP GET". The unique message does not include any phone user identifier. The message includes preferably an identifier relating to a predetermined connection point relating to the second server 18 that allows addressing a connection point that is dedicated to accessing the second server 18 for an application enrollment process. According to such an alternative, the first server 162 is not involved to transmit to the second server 18 the enrolment request accompanied with a phone user identifier. According to such an alternative, the second server 18 does not therefore receive any phone user identifier.

Then, the first server 162 sends to the second server 18 the second message 24, such as an "HTTP://g-host/enroll/initiate", as a request of the type "HTTP GET", that includes the corresponding MSISDN, as the phone user identifier.

Subsequently, based on the open socket relating to the IP at the second server 18 side, the second server 18 sends back to the phone 12 a message 26, as a response of the type "HTTP response 200 OK", including preferably a certificate, like a X.509 type certificate, including one (or several) public key(s) relating to the second server 18. Such a second server certificate transmission allows transferring to the phone 12 a second server key.

The phone 12 verifies whether the received certificate is or is not a genuine certificate originating from the second server 18.

If the received certificate is not a genuine certificate relating to the second server 18, then the phone 12 aborts the launched application enrolment process.

Otherwise, i.e. only if the received certificate is a genuine certificate originating from the second server 18, the phone 12 goes ahead in the application enrolment process.

When the phone 12 has successfully verified the certificate as a genuine certificate that originates from the second server 18, the phone 12 retrieves a key relating to the phone enrolment application, as a transport key TK.

The phone 12 may have previously generated the transport key TK.

The phone 12 extracts from the received genuine certificate the public key relating to the second server 18, as a public (second) server 18 key.

The phone 12 ciphers preferably the transport key TK by using the public server 18 key and a predetermined algorithm, like an RSA type algorithm. The phone 12 gets thus a ciphered transport key [TK].

Then, the phone 12 sends to the second server 18 a third message 28 including a request, such as an "HTTP://g-host/enroll/getAccessToken?TK=[CTK]", as a request of the type "HTTP GET", for getting one or several tokens accompanied with the ciphered transport key denoted [CTK].

The third message 28 includes a predetermined URL relating to the second server 18, as a particular second server identifier.

According to a particular invention embodiment (represented), the predetermined second server identifier is to be detected or found by the first server 162. The first server 162 intercepts the third message 28 including the token request by detecting the predetermined identifier relating to the second server 18, as a recipient of the third message 28.

The first server 162 gets from a retrieved subscription identifier, like an IMSI, that is used by the mobile network 16 to identify the mobile equipment 10 (i.e. the phone 12/chip 14 system), a corresponding MSISDN, as a phone user identifier.

Once the first server 162 has retrieved the phone user identifier, the first server 162 generates a fourth message 210 including the token request, by inserting the phone user identifier within a header of the fourth message 210. The fourth message 210 includes the corresponding phone user identifier.

Then, the first server 162 sends to the second server 18 the fourth message 210 including the token request, such as an "HTTP://ghost/enroll/getAccessToken?TK=[CTK]", as a request of the type "HTTP GET", for getting one or several tokens accompanied with the ciphered transport key [CTK].

The first server 162 may further insert within a thus generated message an identifier relating to a predetermined connection point relating to the second server 18. The predetermined second server connection point identifier allows addressing a connection point that is dedicated to accessing the second server 18 for an application enrollment process.

The second server 18 receives within the fourth message 210 the concerned phone user identifier.

Then, the second server 18 verifies whether the identified phone user is or is not authorized to access the (requested) service. When authorized, the received phone user identifier constitutes a proof that the considered phone user has been previously authenticated by a corresponding mobile network server.

If the identified phone user is not authorized to access the service, then the second server 18 aborts the launched application enrolment process.

Otherwise, i.e. only if the identified phone user is authorized to access the service, the second server 18 deciphers the ciphered transport key [CTK] by using a corresponding private key relating to the second server 18. Furthermore, the second server 18 may generate one or several tokens that allow the second server 18 interlocutor to be authenticated to access a requested service.

The second server 18 fetches the stored token(s), like a kind of identifier denoted ApplicationTokenldentifier (or ATI) and a kind of key denoted AuthorizationTokenSecret (or ATS). The second server 18 ciphers the token(s) by using the transport key TK, as the phone application key. The resulting ciphered tokens are denoted [ATI and ATS] TK.

According to an alternative (not represented), instead of using an HTTP type message and involving the first server 162, the phone 12 sends, through two mobile network entities, e.g. an HLR and an SMS-C, to the second server 18 an SMS type message, as a third message, including an enrolment request and a ciphered phone application key. The first server 162 is thus not involved to transmit to the second server 18 the SMS type message. The SMS type message is preferably an SMS-Mobile Originated (or MO) message. As known per se, the HLR gets, as routing information, the corresponding MSISDN, as the phone user identifier associated with the phone 12 that allows reaching the phone 12. The SMS-C generates an SMS type message, as a fourth message, by inserting the corresponding phone user identifier to the received SMS type message and forwards the fourth message to the second server 18 as the addressee or recipient specified within the third message.

Subsequently, based on the open socket relating to the IP at the second server 18 side, the second server 18 sends back to the phone 12 a fifth message 212, like an "HTTP response 200 OK", as an HTTP type response to the previous received HTTP request, that includes one or several ciphered tokens [ATI, ATS] TK.

Likewise, according to the alternative (not represented), instead of using an HTTP type message and involving the first server 162, the second server 18 sends to the phone 12 one or several SMS type messages, as the fifth message, including one or several ciphered tokens [ATI, ATS] TK. The first server 162 is thus not involved to transmit to the phone 12 the SMS type message. The SMS type message is preferably an SMS-Mobile Terminated (or MT) message.

The phone 12 deciphers the ciphered tokens ATI, ATS.

Once deciphered, the phone 12 stores the tokens ATI, ATS that allow the phone 12 to access one or several services.

The phone 12 sends preferably to the second server 18 a sixth message 214 including a request, such as an "HTTP://g-host/enroll/commit", as a request of the type "HTTP GET", for committing to the second server 18 along with a corresponding signature that the phone 12 generates by using e.g. the ATS, as one or several received tokens.

The second server 18 verifies whether the signature is valid or not.

If the signature is not valid, then the second server 12 does not allow the phone 12 to use the issued tokens by e.g. invalidating the issued tokens.

Otherwise, i.e. if the signature is valid, the second server 12 sends back to the phone 12 an "HTTP response 200 OK" 216, as an HTTP type response to the previous received HTTP request 214, so as to validate the issued tokens.

The invention solution allows thus providing, in a seamless and secure manner, the phone application with one or several tokens without needing to involve the phone user (except for her or his authentication to unlock an authentication key for a phone authentication before a mobile network entity, like an HLR or an HSS).

Subsequently, the phone 12 uses the stored token(s), as authentication data allowing the phone application to be authenticated, so as to access a corresponding service(s) through either a mobile network channel, such as an MNO's 3GPP network, or a non-mobile network channel, like a Wi-Fi network.

## Claims

1. A method (20) for accessing a service,
**characterized in that** the method comprises the following steps:
- a device (12) authenticates to a mobile network server;
- the device sends to an application server (18) an enrolment request (22);
- the application server sends to the device at least one key (26) relating to the application server;
- the device sends to the application server a request (28) for getting at least one token accompanied with at least one key relating to a device application, the device application key being ciphered by using the application server key;
- the application server receives an identifier (210) relating to a device user;
- the application server verifies whether the identified device user is or is not authorized to access the service;
- only if the identified device user is authorized, the application server deciphers the ciphered device application key and ciphers at least one token by using the device application key;
- the application server sends to the device at least one ciphered token (212);
- the device deciphers the at least one ciphered token;
- the device stores the at least one token, the at least one token allowing the device application to be authenticated.

2. Method according to claim 1, wherein, prior to receiving, by the application server, an identifier relating to a device user, the method further includes:
- a mobile network entity (162) intercepts a first message (22) including the enrolment request, by detecting a predetermined identifier relating to the application server, as a recipient device;
- the mobile network entity inserts within a second message including the enrolment request the identifier relating to a device user; and
- the mobile network entity sends to the application server the second message (24).

3. Method according to claim 2, wherein the mobile network entity further inserts within the second message including the enrolment request an identifier relating to a predetermined connection point relating to the application server.

4. Method according to any previous claim, wherein the application server sends to the device a certificate including at least one public key relating to the application server and, prior to sending the device application key, the device verifies successfully that the server certificate is a genuine certificate.

5. Method according to any previous claim, wherein a mobile network entity (162) intercepts a third message (28) including the token request and the device application key;
- the mobile network entity inserts the identifier relating to a device user within a fourth message including the token request and the device application key; and
- the mobile network entity sends to the application server the fourth message (210).

6. Method according to any previous claim, wherein the token request and the device application key are included within an HTTP type message or an SMS type message.

7. Method according to any previous claim, wherein the device sends to the application server a request (214) for committing to the application server accompanied with a signature generated by using at least one received token, the application server verifies whether the signature is or is not valid, and, only if the signature is valid, the application server sends to the device an approval (216) for establishing at least one communication session.

8. An application server (18) for accessing a service,
**characterized in that** the server is configured:
- to receive an enrolment request (24) ;
- to send to the device at least one key (26) relating to the application server;
- to receive a request (210) for getting at least one token accompanied with at least one key relating to a device application, the device application key being ciphered by using the server key;
- to receive an identifier (210) relating to a device user;
- to verify whether the identified device user is or is not authorized to access the service;
- to decipher, only if the identified device user is authorized, the ciphered device application key;
- to cipher at least one token by using the device application key; and
- to send to the device at least one ciphered token (212).

9. A device (12) for accessing a service,
**characterized in that** the device is configured:
- to authenticate to a mobile network server;
- to send to an application server an enrolment request (22);
- to receive at least one key (26) relating to the application server;
- to send to the application server a request (28) for getting at least one token accompanied with at least one key relating to a device application, the device application key being ciphered by using the application server key;
- to receive at least one ciphered token (212);
- to decipher the at least one ciphered token;
- to store the at least one token, the at least one token allowing the device application to be authenticated.

10. A system for accessing a service,
**characterized in that**, the system comprising a device (12) and an application server (18), the device being connected to the application server, the device is configured:
- to authenticate to a mobile network server;
- to send to the application server an enrolment request (22);
**in that** the application server is configured:
- to send to the device at least one key (26) relating to the application server;
- to receive an identifier (210) relating to a device user;
- to verify whether the identified device user is or is not authorized to access the service;
- to decipher, only if the identified device user is authorized, the ciphered device application key and to cipher at least one token by using the device application key;
- to send to the device at least one ciphered token (212);
and **in that** the device is configured:
- to decipher the at least one ciphered token; and
- to store the at least one token, the at least one token allowing the device application to be authenticated.
